# EUROPEAN PATENT SPECIFICATION

(11) **EP 4 440 303 B1**
(45) Date of publication and mention of the grant of the patent: **18.02.2026**
(21) Application number: 23828529.0
(22) Date of filing: 21.11.2023
(51) Int. Cl.: A01M 1/02

(54) **A DEVICE FOR ATTRACTING AND COLLECTING INSECTS**
VORRICHTUNG ZUM ANLOCKEN UND SAMMELN VON INSEKTEN
DISPOSITIF D'ATTRACTION ET DE COLLECTE D'INSECTES

(30) Priority: 20.02.2023 UA 202300655
(43) Date of publication of application: 09.10.2024
(73) Proprietor: Romanova, Anastasiia, Kherson, 73002 (UA)
(72) Inventor: Romanova, Anastasiia, Kherson, 73002 (UA)
(74) Representative: Michalski Hüttermann & Partner Patentanwälte mbB
(86) International application number: PCT/UA2023/000058
(87) International publication number: WO 2024/177613

(56) References cited:
- WO-A1-2020/027761
- WO-A1-2021/112598
- CN-A- 107 182 968
- ES-T3- 2 236 824
- KR-A- 20200 024 677
- KR-B1- 101 094 726

## Description

### FIELD OF THE INVENTION

The invention relates to an insect catching device, in particular, to a trap having a structure that enables to provide a maximum number of insect attraction factors which do not compensate each other, but act in combination, thereby enhancing each other and providing a synergistic effect that eventually creates a rather large-sized area for attracting, effective trapping and retention of blood-sucking flying insects, preferably, mosquitoes.

### PRIOR ART

Use of tools for avoiding a contact between blood-sucking insects and a human is widely known from the prior art. Said tools are divided into two main categories, namely, repelling tools which facilitate to create unacceptable ambient conditions for the insects, preferably, using repellents, and tools for attracting followed by catching and killing being so-called traps which conversely create certain physical and/or chemical properties which attract the flying insects. First of all, the traps are used in places of mass stay of people being restaurants, hotels, outdoor cafes, bars, warehouses, offices etc., and they may be effective both outdoors and within rooms by attracting the insects out from the people towards themselves. One of the attraction factors of the traps is a use of a bright light, thereby effectively attracting the flying insects which will be killed after their collision with an electrical charge on a grid that is arranged opposite to a light source or they will be caught by a sticky surface that surrounds the light source. Other factors which are used in the traps include an imitation of properties of warm-blooded mammals, including a human, such as: heat, odor, breath etc. Most of technical solutions in this field of the art utilize a combination of several baits by equipping the traps with elements for emitting light, heat, carbon dioxide or other attractants. The catching objective is achieved by creating sticky or mechanical or electro-discharge elements which are arranged along a way of approaching of the insect which is not sufficiently effective, since this way may be changed, so, in order to additionally guide the insects towards the catching tool, some technical solutions utilize suction fans.

Currently, traps are the most effective devices for trapping the flying insects, and the traps utilize a combination of visible and ultraviolet light which have a spectrum that may be detected by the insects from a large distance, as well as an ultraviolet radiation, thereby attracting the insects acting as a heat of a living being during approaching, while the traps have a housing with a fan mounted therein for sucking an air and equipped with a special compartment which the insects get in without any possibility to fly out. Preferably, said devices are hand-held, and they may be powered both by a mains and accumulators, thereby making these traps much more advantageous as compared to other types.

The prior art teaches a wide range of insect trapping devices, and the applicant has selected several technical solutions among them, which are the closest to the proposed invention in terms of a set of essential features.

A patent US7937887 B2 dated May 10, 2011 teaches an insect trap and a method of attracting insects by means of a variable infrared radiation. According to this technical solution, the insect trap comprises an insect retention means provided within a housing of the trap in order to inhibit escape of insects, as well as a fan that guides an air flow through a porous bag, the trap further comprises insect attraction means which include at least one variable infrared radiation means arranged adjacent to the fan. The insect attraction means comprise at least one flickering or pulsing light source directed towards the fan. A drawback of the proposed technical solution is that an effective zone is very small and the insects are attracted at short distances only. The trapped insects get into the bag, but the bag loses its properties when the device is switched off, i.e., it is loosened and the insects flew away from the trap, since nothing inhibits them from doing so. The flickering or pulsing light source also affects the device efficiency, since a continuous radiation source imitates an alive warm-blooded living being that is more attractive for the insects. It does not concentrate attention and can be interrupted by a living carrier.

Also, a patent US9049855 B2 dated June 9, 2015 is close, and this patent teaches an insect trap having an air-actuated damper. According to this technical solution, the insect trap comprises a housing composed of an upper chamber and a lower chamber which are interconnected, wherein an upper portion comprises a light source, a cover that is mounted on the housing and a mesh accumulation chamber that is secured to a lower portion of the housing, a side wall of the upper chamber is made as a grid having transverse openings for providing a passage for an air and insects, and an axial fan is mounted in the lower chamber of the housing, the axial fan is configured to draw the air from the upper chamber of the housing to the accumulation chamber, wherein the housing is equipped with insect escape prevention means, at least one supporting rod and a weighted rod.

A drawback of the proposed technical solution is that a radiation zone does not have any heat insulated element that could inhibit a rapid cooling both by the fan and by external factors. Additional cooling significantly reduces the efficiency of the infrared emitter for attracting the insects. The supporting rod and the weighted rod provide stability, but make the entire structure more complicated. The escape prevention means are not sufficiently effective, since the insects will flow away towards the fan after it is switched off.

A technical solution that is closest to the claimed one is a device according to an application WO2020027761 (A1) dated February 6, 2020.

This device utilize a vast majority of insect attracting and catching factors disclosed in the prior art, however, the arrangement of the infrared radiation source on the housing allows a significant amount of the insects to accumulate adjacent to this source and to appear in an area, where caught air flows are not sufficiently powerful. At the same time, in conditions, when there are even insignificant wind gusts, a significant amount of the attracted insects is not quickly caught and killed. Efficiency of the caught flows is reduced, since elements that cause parasitic turbulent flows are arranged in a receiving chamber of the device.

Furthermore, spraying of the carbon dioxide and attractant during operation of the fan at nominal revolutions results in that the significant amount of the sprayed gas and attractant is caught by the air flows and sucked into the device housing, i.e., they appear beyond the area of attraction and probable catching of the insects in the area of collection thereof. In view of this, in order to increase the efficiency of spraying carbon dioxide and attractant, it is required to significantly increase their consumption per time unit of the device operation. Further relevant prior art documents are for example: CN107182968A, KR20200024677A, ES2236824T3, WO2021/112598A1.

It follows from the above-mentioned prior art that a need in such devices is rather high, but their structures bear a number of drawbacks which affect the operation efficiency and consumption of the carbon dioxide and attractants.

### SUMMARY OF THE INVENTION

An objective of the claimed invention is to provide an insect trap which could resolve the prior art drawbacks and provide creation of an area for attracting and effective trapping of insects, preferably, mosquitoes, by using electromagnetic radiation sources having different spectra and intensities, creation of ambient air flows which are not uniform in time, thereby providing an effective trapping of the insects in a large-sized insect accumulation area, while, at the same time, effectively using such attraction factor as spraying carbon dioxide.

Said objective is achieved by providing a trap having an elongated hollow housing that is formed by a base and side walls, equipped with insect attraction and collection means, connected to a top cover in which a control unit with a power supply unit is arranged. An insect collection container and a carbon dioxide reservoir with at least one gas sprayer connected thereto are arranged in a lower portion of the housing.

An axial fan having an outlet that is connected to the insect collection container is arranged in an upper portion of the housing. The outlet of the fan is connected to a receiving chamber that is formed by the top cover and external side meshy walls. A light source and an incoming air flow guide that is connected to the top cover are arranged in the receiving chamber.

According to the invention, the incoming air flow guide is shaped as a truncated cone having a vertex that is oriented towards the fan inlet. A wall of the incoming air flow guide is made light-transmissive and equipped with a heating element along an external surface. The light source is arranged inside the incoming air flow guide and is a broadband light source providing a radiation in both infrared and ultraviolet spectra simultaneously. The infrared radiation of the light source that is arranged inside the incoming air flow guide and the infrared radiation of the heating element that is arranged on the incoming air flow guide have different intensities, thereby forming areas having different temperatures. The control unit is configured to reduce revolutions of the fan lower than nominal ones before the sprayer is switched on and to subsequently increase the revolutions of the fan up to the nominal ones in 20-60 seconds.

Use of the incoming air flow guide that is shaped as the truncated cone having the vertex that is oriented towards the fan inlet provides favorable conditions for the incoming air flows supplied by the fan from the receiving chamber and a space around the receiving chamber to the insect collection container. Modeling and studies have shown that the specific cone-like shape and the cone vertex orientation towards the fan inlet enable to minimize an aerodynamic resistance against the air flows and, thus, to expand the effective insect trapping area.

The heating element is arranged on the outer surface of the guide along its circumference, preferably, near its larger base, creates a uniform IR radiation field that is symmetrical relative to a vertical axis.

The arrangement of the light source inside the guide enables to avoid additional obstacles for the incoming air flows through additional vortexes and additional cooling of the light source. This is significant in view of the fact that the additional cooling may reduce the infrared radiation flow of the light source.

Owing to the infrared radiation within a bio-resonance range that corresponds to a length of infrared waves which are emitted by a human body and is from 7 to 10 µm, we have managed to create an object that imitates a living being and attracts the insects at a long distance by creating UV and visible radiation flows, and at moderate and short distances by creating UV radiation flows, thereby forcing the insect to perceive the trap as a living object at various distances which is as productive for luring as possible.

Use of the two above-mentioned radiation sources enables to combine the light (ultraviolet) radiation and the thermal (infrared) radiation within those places which are the most optimal for the insect detection.

It is known that the insect vision for seeking a victim is provided by a gene IR21a and it is a kind of a thermal imager which provides the insects, in particular, mosquitoes, with an ability to differ a live organism from other objects.

The ultraviolet radiation that fades out, when the distance increases, much less as compared to the infrared radiation may be perceived by the insects at long distances and causes the insects to move towards it and to the zone where they may perceive the infrared radiation.

It is known that the insects are able to differentiate body areas with a small temperature difference at a short distance. This ability have been developed evolutionarily in order to orientate on a body surface area having the closest arrangement of blood vessels. The insect tries to target at this particular site of vessels location.

Studies have shown that the use of the two infrared radiation sources having different intensities leads to a more accurate orientation of the majority of the insects at a short distance from a less intensive radiation source towards a more intensive radiation source. In view of the fact that the light source that generates the IR radiation of having the intensity that is higher than the radiation that is generated by the heating elements and said light source is arranged closer to a central portion of the receiving chamber, the insects are orientated and migrated towards the central portion of the receiving chamber, as well as they are caught by the air flows. That is, this particular combination of the radiation sources causes the significant increase of the device operation efficiency.

Also, samples of the devices have been manufactured and tested, where the heating element was arranged at different places of the guide surface, heated such that its radiation intensity was higher than the IR radiation intensity of the light source that is arranged inside the guide. The effect caused by the presence of two IR radiation sources having different intensities have appeared in this case as well. Therefore, the particular presence of the two IR radiation sources having different intensities is an important factor for providing the orientation of the insects at a last step of their flying path towards the receiving chamber. It is important to ensure that the source having the higher IR radiation intensity to which the insect orients at a last piece of the flying path is arranged within a coverage of the caught air flows.

An important factor for providing stable and effective attraction of the insects is use of such attracting factors as carbon dioxide and other attractants, e.g., lactic and/or carbon acids, octenol etc., which imitate odors that are characteristic for living warm-blooded creature. The attractant may be used in a form of a sachet, an adhesive tape, a plate or a liquid-soaked fabric, paper that is arranged within a special reservoir having discharge means.

However, use of rather powerful air flows as a main insect catching tool, especially in long-range devices, results in a quick dispersion and blowing of the gas and volatile fractions of the attractants by the fan out from the insect effective catching area. During operation of the large-sized device having the powerful fan, even negative results of use of the gas and attractants may appear in view of their transfer from the trapping area to a surrounding area that is close to the device, disorientation of a certain amount of insects or certain species of insects, and, thus, avoiding being caught by the device. This effect may be enhanced in view of the fact that the carbon dioxide successively comes down and its excessive use may create the insect attraction area in that place from which they must be removed, namely, in the surrounding area around the device, under the fan level.

The above-mentioned drawback is resolved by the fact that the device is equipped with the control unit with the power supply unit, the control unit is configured to reduce revolutions of the fan lower than the nominal ones before the sprayer is switched on and to subsequently increase the revolutions of the fan up to the nominal ones after the spraying is completed.

A number of tests has been conducted, where the fan was stopped or its rotation speed was reduced before spraying the carbon dioxide and/or attractant. A full stoppage of the fan before spraying, under the proviso that a high amount of the insects is present, often resulted in that a part of the insects flew off the device. However, when the revolutions of the fan were reduced before spraying by 50 and more percent, the efficiency of the insect trapping was increased significantly, and there was no observed reduction of trapping or negative flying-off effect. The operation duration of the fan at the reduced revolutions may be selected depending on whether the air is present or absent and its speed at an operation site of the device. The higher is the air speed, the higher is the operation duration of the fan at the reduced speed.

According to an exemplary preferable embodiment of the invention, the elongated hollow housing is formed by the base, vertically oriented bars having side walls secured thereon. The bars and the side walls may be made of any structural materials such as metal, plastic, wood, which are available at a certain region and acceptable according to safety and environmental regulations.

The incoming air flow guide must be optically transparent in order to ensure a free passage of the radiation from the light source that is arranged inside the guide and it must have a smooth external surface in order to minimize the resistance against the incoming air flows. However, during conduction of experiments it has been found that an important feature of the guide is its suitability for periodical cleaning that is necessary during the usage process. Making it from a metal or a plastic grid allows to clean it with mechanical tools easily without using cleaning substances which is important for the environmental conservation. During studying the device operation via a thermal imager, it has been unexpectedly found that the passage of the light through the grid forms a more uniform radiation field in the IR and UV spectra, thus, such radiation field will be more likely perceived by the insects as a living being. Therewith, shadings of the light source that is arranged inside the guide are insignificant and acceptable.

According to one of exemplary embodiments, the device comprises an additional attractant source that is connected to the sprayer. The attractant source is connected to a carbon dioxide supply channel before supplying the same to the sprayer. The connection may be made, e.g., after the carbon dioxide passed through a reducer, using an electromagnetic valve that is connected by the control unit or by a manual pipeline hydrant.

According to one of exemplary embodiments of the device, the heating element is made as an infrared radiation element that is arranged along a circumference of the external surface of the incoming air flow guide. This may be a heating film, a heating spiral or a combination thereof.

According to a further exemplary embodiment of the device, the light source is made as at least three gas discharge lamps which are arranged symmetrically relative to an axis of the incoming air flow guide. It is reasonable to use this design for standalone devices which are intended for areas of a significant volume, e.g., large restaurant terraces. Use of several lamps in these devices allows to create a more uniform circular radiation field and to enlarge the device coverage.

According to a preferable exemplary embodiment, the device comprises the control unit that is configured to reduce the revolutions of the fan down to the nominal ones by 50-70% in 2-5 seconds before the sprayer starts to spray the carbon dioxide. In order to regulate the revolutions, a pulse-width regulator or a device that enables to regulate a current or a voltage supplied to the fan may be used, or the fan is equipped with the corresponding devices by a manufacturer. In order to determine the time, a corresponding relay or timer being a part of the control unit may be used.

According to one of embodiments, the device comprises the control unit with the power supply unit, the control unit is configured to reduce the revolutions of the fan lower than the nominal ones before the sprayer is switched on and to subsequently increase the revolutions of the fan up to the nominal ones in 20-60 seconds after the reduction, and the operation duration of the sprayer is 1-6 seconds.

According to one of embodiments of the device, the sprayer is made as nozzles which are arranged symmetrically on the upper portion of the housing surface.

According to one of exemplary embodiments of the device, a remote control and data transmission means may be mounted. To this end, prior art devices and algorithms, e.g., a Wi-Fi or Bluetooth technology, may be used.

According to a further exemplary embodiment, the trap is equipped with an insect type recognition means arranged at the inlet and/or at the outlet of the fan. To this end, prior art means, including video- and/or photo fixation devices and devices for collecting a received information, may be used. These means may include one or more low-dimensioned video cameras connected to processors having software blocks which register an image of the insect that will be processed in the device directly using known processing algorithms and comparing the images to detect characteristic signs which could enable to identify the insect type, or the image will be transferred for further processing and forming a corresponding statistical data indicating a geolocation. For example, this can be made by using cloud storages.

The video and/or photo fixation devices may be arranged both on the elements of the upper chamber structure to register the insects on the approach and on the outlet of the fan or inlet of the collection container for the caught insects. The chambers and the image processing software products are known from the prior art and widely used to recognize three-dimensional objects of various dimensions.

According to one of exemplary embodiments of the device, the carbon dioxide reservoir is equipped with a gas pressure sensor.

### BRIEF DESCRIPTION OF THE DRAWINGS

A possibility of implementation of the invention is illustrated by the drawings, which depict the following.

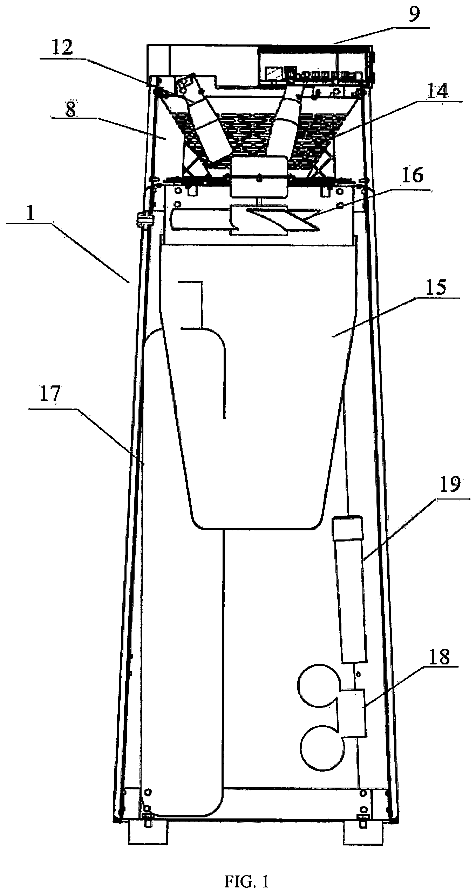

Fig. 1 illustrates a vertical cross-section of the device;

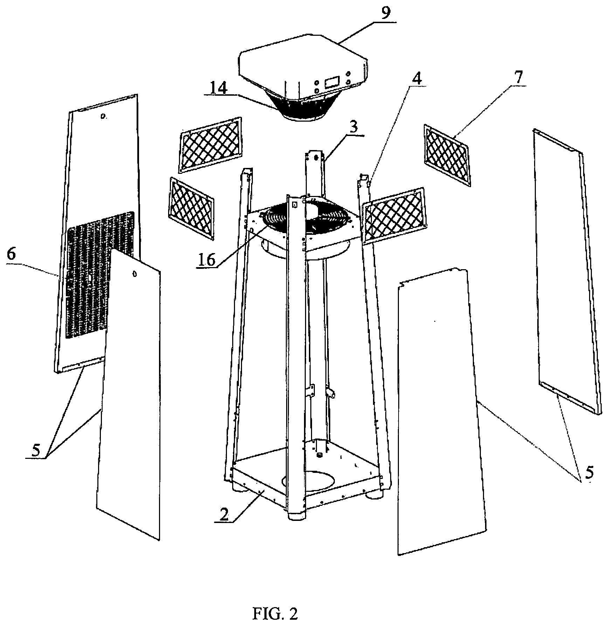

Fig. 2 illustrates an exploded view of the device;

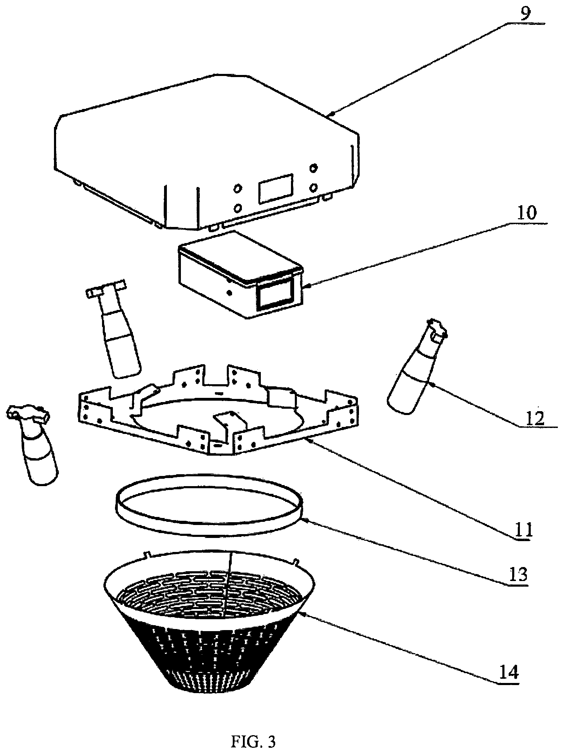

Fig. 3 illustrates a guide-and-cover assembly;

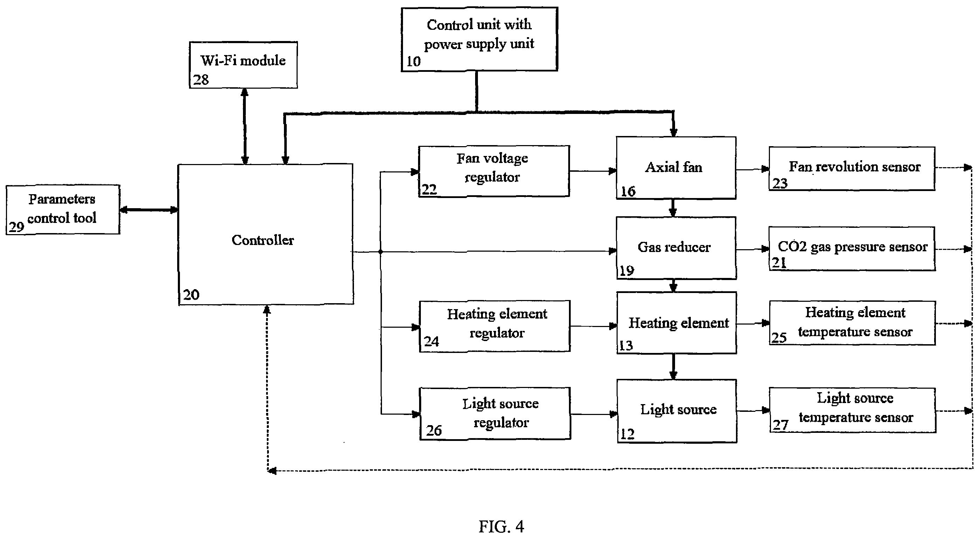

Fig. 4 illustrates an electrical control circuit of the device.

### Main designations

- 1 -: the housing;
- 2 -: the base of the housing;
- 3 -: the vertically oriented bars;
- 4 -: the sprayer;
- 5 -: the side walls of the housing;
- 6 -: a hatch of the side wall of the housing;
- 7 -: the meshy external wall;
- 8 -: the receiving chamber;
- 9 -: the cover of the housing;
- 10 -: the control unit with the power supply unit;
- 11 -: a fastening element;
- 12 -: the light source;
- 13 -: the heating element;
- 14 -: the incoming air flow guide;
- 15 -: the insect collection container;
- 16 -: the axial fan;
- 17 -: the carbon dioxide reservoir;
- 18 -: the additional attractant source;
- 19 -: a gas reducer;
- 20 -: a controller;
- 21 -: a CO2 gas pressure sensor;
- 22 -: a fan voltage regulator;
- 23 -: a fan revolution sensor;
- 24 -: a heating element regulator;
- 25 -: a heating element temperature sensor;
- 26 -: a light source regulator;
- 27 -: a light source temperature sensor;
- 28 -: a Wi-Fi module;
- 29 -: a user control tool.

### IMPLEMENTATION POSSIBILITY

The insect trap has the elongated housing (1) that is formed by the base (2) and the side walls (5). According to one of exemplary embodiments, the housing (1) is formed by the vertically oriented bars (3) which are secured to the base (2) with the side walls (5). Elements of the housing (1) may be made of metal, plastic or wood. Also, the hollow housing (1) may be made of a profiled metal or plastic sheets, and since the trap is to be mounted, e.g., at children's playgrounds or restaurant terraces, this structure enables designers to provide attractive features of its visual appearance depending on traditions and preferences of a region of usage. The carbon dioxide reservoir (17) is secured in the lower portion of the housing (1) and connected to the sprayer (4) via a pipeline. This connection may be made via the reducer (19) that, in turn, may be connected to the additional attractant source (18) that is arranged on its external surface. One of the side walls (5) is provided with the hatch (6) or it is made as a removable side wall (5) for replacing the carbon dioxide reservoir (17) and cleaning the container (15). The lower portion of the housing (1) may be provided with openings having an area of not less than the outlet area of the fan (16) to enable a free exit of the air after it is passed through the insect collection container (15). According to one of exemplary embodiments, these openings are provided in the form of the meshy hatch (6).

The axial fan (16) is arranged in the upper portion of the housing (1). The outlet of the fan (16) is directed towards the interior of the housing (1) and connected to the insect container (15). The fan (16) may be selected among a large plurality of manufacturers' proposals depending on the trap dimensions and climatic conditions in which it is to be used. The outlet of the fan (16) is directed towards the receiving chamber (8) that is formed by the cover (9) and the side meshes (7). The mesh (7) is provided with smooth surfaces in order to reduce the aerodynamic resistance against the incoming air flows.

The cover (9) is connected to the incoming air flow guide (14) that is shaped as a truncated cone having a vertex that is oriented towards the inlet of the fan (16). A wall of the incoming air flow guide (14) is made light-transmissive and equipped with the heating element (13) along the external surface. The light source (12) is arranged inside the guide (14). In order to provide a reliable connection between the cover (9) and the guide (14) as well as a quick arrangement of the light source (12), the fastening element (11) may be used or means for securing directly to the guide (14), the light source (12) and the heating guide (14), the light source (12) and the heating element (13) with consideration of features of the selected embodiment of these elements.

The guide (14) may be fully optically transparent and made of plastic or glass, i.e., configured to pass the radiation from the light source (12). According to the preferable exemplary embodiment of the trap, the guide (14) is meshy. The openings of the mesh may have lower dimensions than the insects. The radiation from the light source (12) that is arranged in the meshy guide (14) easily passes through the meshy wall of the guide (14). The mesh may be made both of metal and plastic. Preferably, the light source (12) is one or more gas discharge lamps. Also, LEDs or sets of LEDs which may provide a simultaneous radiation in a wide spectrum, from UV to IR, may be used. The heating element (13) is arranged on the external surface of the guide (14), and the heating element may be made of a film or a heating coil, or of ceramics. The heating element (13) on the surface of the guide (14) may be arranged both near the cone base and near the vertex or in a middle portion of the external surface of the guide (14).

The light source (12) and the heating element (13) emit the radiation flows in the IR spectrum as bodies with different temperatures. This is achieved by choosing the light source (12) and the heating element (13) having corresponding parameters or by adjusting the power current that is supplied to each of them.

The cover (9) is made box-shaped. The control and power supply unit (10) is arranged therein. The control and power supply unit (10) may be implemented by tools which are known from the prior art.

The device is powered by the mains. Also, use of accumulators having an inverter may be provided to operate in locations with no access to the mains.

In order to perform switchings which are required to reduce the revolutions of the fan (16), to subsequently increase the revolutions of the fan (16), to switch the carbon dioxide sprayers (4) on and off, prior art devices may be used, e.g., mechanical or electromechanical timers and electromagnetic switches.

The timer, according to a set program, provides signals to the electromagnetic switches (relays) which perform the corresponding switchings that result in switching the device on/off the operation mode of the device, in switching the sprayers (4) on/off, in reducing/increasing the revolutions of the fan (16).

According to the preferable embodiment of the control unit (10) with the power supply unit, it is made using the controller (20) that may generate signals to switch on/switch off/switch, supports the operation of the Wi-Fi module (28), processes the data transmitted by the insect types recognition and recording means.

In order to control the operation parameters of the device elements, the control unit (10) with the power supply unit is configured to connect to the mains or an alternating current battery having a voltage of 100-250 Volts. The control unit is a combination of the controller (20) that is connected to the gas reducer (19) equipped with the pressure sensor (21), the fan voltage regulator (22) equipped with the revolution sensor (23), the heating element regulator (24) equipped with the temperature sensor (25), the light source regulator (26) equipped with the light source temperature sensor (27). The Wi-Fi module (28) and the tool (29) for controlling the device operation parameters may be connected to the Wi-Fi module (28), and the tool for controlling the device operation parameters may be an external user interface that is provided on the housing (1) of the device or a remote control tool, e.g., a remote control, a mobile application etc.

The power supply unit (10) supplies the power having given parameters to all elements of the device, the controller (20) receives signals from the fan revolution sensor (23), from the CO₂ pressure sensor (21), from the heating element temperature sensor (25), from the light source temperature sensor (27) and forms the corresponding signals to be provided to the regulators (22, 24, 26) in order to maintain or change the revolution level of the fan (16), the temperature of the heating element (13), the temperature of the light source (12) respectively. Said regulators (22, 24, 26) are made as prior art semiconductor devices which operate using the pulse-width modulation technology. The controller (20) also forms signals for a valve of the CO₂ reducer (19), for the Wi-Fi module (28) and for the control tool (29).

## Claims

1. A device for attracting and collecting insects comprising an elongated hollow housing (1) that is formed by a base (2) and side walls (5), a top cover (9) in which a control unit (10) with a power supply unit is arranged, an insect collection container (15), and a carbon dioxide reservoir (17) with at least one sprayer (4) connected thereto arranged in a lower portion of the housing (1); wherein an axial fan (16) having an outlet that is connected to the insect collection container (15) is arranged in an upper portion of the housing (1), a receiving chamber (8) is provided over an inlet of the fan (16), the receiving chamber comprises meshy external walls (7) and a light source (12) and an incoming air flow guide (14) that is connected to the cover (8); wherein the sprayer (4) is arranged on an external surface of the upper portion of the housing (1) over the inlet of the fan (16), **wherein** the incoming air flow guide (14) is shaped as a truncated cone having a vertex that is oriented towards the fan (16) inlet, and a wall of the incoming air flow guide (14) is made light-transmissive and is equipped with a heating element (13) along an external surface, the light source (12) is arranged inside the incoming air flow guide (14) and is a broadband light source providing a radiation in both infrared and ultraviolet spectra simultaneously, and the infrared radiation of the light source (12) and the infrared radiation of the heating element (13) that is arranged on the incoming air flow guide (14) have different intensities, thereby forming areas having different temperatures, and the control unit (10) with the power supply unit is configured to reduce revolutions of the fan (16) lower than nominal ones before the sprayer (4) is switched on and to subsequently increase the revolutions of the fan (16) up to the nominal ones in 20-60 seconds.

2. The device for attracting and collecting insects according to claim 1, **wherein** the side walls (5) of the housing are made in a form of panels that are secured on vertically oriented bars (3) which are mounted on the base (2).

3. The device for attracting and collecting insects according to claim 1, **wherein** the incoming air flow guide (14) is meshy.

4. The device for attracting and collecting insects according to claim 1, further comprising an additional attractant source (18) that is connected to the sprayer (4).

5. The device for attracting and collecting insects according to claim 1, **wherein** the heating element (13) is a film or a coil that is arranged along a circumference of the external surface of the incoming air flow guide (14).

6. The device for attracting and collecting insects according to claim 1, **wherein** the light source (12) is made as at least three gas discharge lamps that are arranged symmetrically relative to an axis of the incoming air flow guide (14).

7. The device for attracting and collecting insects according to claim 1, **wherein** the control unit (10) is configured to reduce the revolutions of the fan (16) below the nominal ones by 50-70% in 2-5 seconds before the sprayer (4) starts to spray the carbon dioxide.

8. The device for attracting and collecting insects according to claim 1, **wherein** the control unit (10) is configured to reduce the revolutions of the fan (16) below the nominal ones by 50-70% before the sprayer (4) starts to spray the carbon dioxide, and the sprayer (4) is configured to spray the gas in 1-6 seconds.

9. The device for attracting and collecting insects according to claim 1, **wherein** the sprayer (4) comprises nozzles that are arranged symmetrically on the upper portion of the housing (1) surface.

10. The device for attracting and collecting insects according to claim 1, **wherein** the control unit (10) is configured to be wirelessly connected to Internet.

11. The device for attracting and collecting insects according to claim 1, further comprising an insect types recognition and recording means comprising video cameras that are arranged in the receiving chamber (8) and a processor for processing images from the video cameras.

12. The device for attracting and collecting insects according to claim 1, **wherein** the carbon dioxide reservoir (17) is equipped with a gas reducer (19) having a gas pressure sensor.

## Patentansprüche

1. Vorrichtung zum Anlocken und Sammeln von Insekten, aufweisend ein längliches hohles Gehäuse (1), das aus einem Boden (2) und Seitenwänden (5) gebildet ist, eine obere Abdeckung (9), in der eine Steuereinheit (10) mit einer Stromversorgungseinheit angeordnet ist, einen Insektensammelbehälter (15) und einem Kohlendioxidreservoir (17) mit mindestens einem daran angeschlossenen Sprühgerät (4), das in einem unteren Teil des Gehäuses (1) angeordnet ist; wobei ein Axialventilator (16) mit einem Auslass, der mit dem Insektensammelbehälter (15) verbunden ist, in einem oberen Teil des Gehäuses (1) angeordnet ist, eine Aufnahmekammer (8) über einem Einlass des Ventilators (16) vorgesehen ist, wobei die Aufnahmekammer netzartige Außenwände (7) und eine Lichtquelle (12) sowie eine mit der Abdeckung (8) verbundene Einströmluftstromführung (14) aufweist; wobei das Sprühgerät (4) an einer Außenfläche des oberen Abschnitts des Gehäuses (1) über dem Einlass des Ventilators (16) angeordnet ist, **wobei** die Einströmluftstromführung (14) als Kegelstumpf mit einer zum Einlass des Ventilators (16) gerichteten Spitze ausgebildet ist und eine Wand der Einströmluftstromführung (14) lichtdurchlässig ist und entlang einer Außenfläche mit einem Heizelement (13) ausgestattet ist, die Lichtquelle (12) innerhalb der Einströmluftstromführung (14) angeordnet ist und eine Breitbandlichtquelle ist, die gleichzeitig Strahlung im Infrarot- und im Ultraviolettspektrum liefert, und die Infrarotstrahlung der Lichtquelle (12) und die Infrarotstrahlung des Heizelements (13), das an der Einströmluftstromführung (14) angeordnet ist, unterschiedliche Intensitäten aufweisen, wodurch Bereiche mit unterschiedlichen Temperaturen gebildet werden, und die Steuereinheit (10) mit der Stromversorgungseinheit so konfiguriert ist, dass sie die Drehzahl des Ventilators (16) vor dem Einschalten des Sprühgeräts (4) unter die Nenndrehzahl reduziert und anschließend die Drehzahl des Lüfters (16) innerhalb von 20 bis 60 Sekunden auf die Nenndrehzahl erhöht.

2. Vorrichtung zum Anlocken und Sammeln von Insekten nach Anspruch 1, **wobei** die Seitenwände (5) des Gehäuses in Form von Platten ausgebildet sind, die an vertikal ausgerichteten Stangen (3) befestigt sind, die auf dem Boden (2) montiert sind.

3. Vorrichtung zum Anlocken und Sammeln von Insekten nach Anspruch 1, **wobei** die Einströmluftstromführung (14) netzartig ausgebildet ist.

4. Vorrichtung zum Anlocken und Sammeln von Insekten nach Anspruch 1, die ferner eine zusätzliche Lockstoffquelle (18) aufweist, die mit dem Sprühgerät (4) verbunden ist.

5. Vorrichtung zum Anlocken und Sammeln von Insekten nach Anspruch 1, **wobei** das Heizelement (13) eine Folie oder eine Spule ist, die entlang eines Umfangs der Außenfläche der Einströmluftstromführung (14) angeordnet ist.

6. Vorrichtung zum Anlocken und Sammeln von Insekten nach Anspruch 1, **wobei** die Lichtquelle (12) aus mindestens drei Gasentladungslampen besteht, die symmetrisch zu einer Achse der Einströmluftstromführung (14) angeordnet sind.

7. Vorrichtung zum Anlocken und Sammeln von Insekten nach Anspruch 1, **wobei** die Steuereinheit (10) so konfiguriert ist, dass sie die Drehzahl des Ventilators (16) innerhalb von 2 bis 5 Sekunden um 50 bis 70 % unter die Nenndrehzahl reduziert, bevor das Sprühgerät (4) mit dem Versprühen des Kohlendioxids beginnt.

8. Vorrichtung zum Anlocken und Sammeln von Insekten nach Anspruch 1, **wobei** die Steuereinheit (10) so konfiguriert ist, dass sie die Drehzahl des Ventilators (16) um 50-70 % unter die Nenndrehzahl reduziert, bevor der Sprüher (4) mit dem Versprühen des Kohlendioxids beginnt, und wobei das Sprühgerät (4) so konfiguriert ist, dass es das Gas innerhalb von 1-6 Sekunden versprüht.

9. Vorrichtung zum Anlocken und Sammeln von Insekten nach Anspruch 1, **wobei** das Sprühgerät (4) Düsen umfasst, die symmetrisch auf der Oberseite des Gehäuses (1) angeordnet sind.

10. Vorrichtung zum Anlocken und Sammeln von Insekten nach Anspruch 1, **wobei** die Steuereinheit (10) so konfiguriert ist, dass sie drahtlos mit dem Internet verbunden ist.

11. Vorrichtung zum Anlocken und Sammeln von Insekten nach Anspruch 1, die ferner ein Mittel zum Erkennen und Aufzeichnen von Insektenarten aufweist, das Videokameras aufweist, die in der Aufnahmekammer (8) angeordnet sind, sowie einen Prozessor zum Verarbeiten von Bildern aus den Videokameras.

12. Vorrichtung zum Anlocken und Sammeln von Insekten nach Anspruch 1, **wobei** das Kohlendioxidreservoir (17) mit einem Gasreduzierer (19) mit einem Gasdrucksensor ausgestattet ist.

## Revendications

1. Dispositif pour attirer et collecter des insectes comprenant un logement creux allongé (1) qui est formé par une base (2) et des parois latérales (5), un couvercle supérieur (9) dans lequel une unité de commande (10) avec une unité d'alimentation électrique est agencée, un récipient de collecte d'insectes (15), et un réservoir de dioxyde de carbone (17) avec au moins un pulvérisateur (4) qui est relié à ce dernier agencé dans une portion inférieure du logement (1) ; dans lequel un ventilateur axial (16) ayant une sortie qui est reliée au récipient de collecte d'insectes (15) est agencé dans une portion supérieure du logement (1), une chambre de réception (8) est prévue au-dessus d'une entrée du ventilateur (16), la chambre de réception comprend des parois externes en treillis (7) et une source de lumière (12) et un guide de flux d'air entrant (14) qui est relié au couvercle (8) ; dans lequel le pulvérisateur (4) est agencé sur une surface externe de la portion supérieure du logement (1) au-dessus de l'entrée du ventilateur (16), **dans lequel** le guide de flux d'air entrant (14) est façonné en forme de tronc de cône ayant un sommet qui est orienté vers l'entrée du ventilateur (16), et une paroi du guide de flux d'air entrant (14) est réalisée translucide et est équipée d'un élément chauffant (13) le long d'une surface externe, la source de lumière (12) est agencée à l'intérieur du guide de flux d'air entrant (14) et est une source de lumière à large bande fournissant un rayonnement dans les deux spectres infrarouge et ultraviolet simultanément, et le rayonnement infrarouge de la source de lumière (12) et le rayonnement infrarouge de l'élément chauffant (13) qui est agencé sur le guide de flux d'air entrant (14) ont des intensités différentes, formant de ce fait des zones ayant des températures différentes, et l'unité de commande (10) avec l'unité d'alimentation électrique est configurée pour réduire la vitesse de rotation du ventilateur (16) en dessous des valeurs nominales avant que le pulvérisateur (4) ne soit activé et pour augmenter ensuite la vitesse de rotation du ventilateur (16) jusqu'aux valeurs nominales en 20 à 60 secondes.

2. Dispositif pour attirer et collecter des insectes selon la revendication 1, dans lequel les parois latérales (5) du logement sont réalisées sous forme de panneaux qui sont fixés sur des barres orientées verticalement (3) qui sont montées sur la base (2).

3. Dispositif pour attirer et collecter des insectes selon la revendication 1, **dans lequel** le guide de flux d'air entrant (14) est en treillis.

4. Dispositif pour attirer et collecter des insectes selon la revendication 1, comprenant en outre une source d'attraction supplémentaire (18) qui est reliée au pulvérisateur (4).

5. Dispositif pour attirer et collecter des insectes selon la revendication 1, **dans lequel** l'élément chauffant (13) est un film ou une bobine qui est agencé le long d'une circonférence de la surface externe du guide de flux d'air entrant (14).

6. Dispositif pour attirer et collecter des insectes selon la revendication 1, **dans lequel** la source de lumière (12) est réalisée sous forme d'au moins trois lampes à décharge de gaz qui sont agencées de façon symétrique par rapport à un axe du guide de flux d'air entrant (14).

7. Dispositif pour attirer et collecter des insectes selon la revendication 1, **dans lequel** l'unité de commande (10) est configurée pour réduire la vitesse de rotation du ventilateur (16) en dessous des valeurs nominales de 50 à 70 % en 2 à 5 secondes avant que le pulvérisateur (4) ne commence à pulvériser le dioxyde de carbone.

8. Dispositif pour attirer et collecter des insectes selon la revendication 1, **dans lequel** l'unité de commande (10) est configurée pour réduire la vitesse de rotation du ventilateur (16) en dessous des valeurs nominales de 50 à 70 % avant que le pulvérisateur (4) ne commence à pulvériser le dioxyde de carbone, et le pulvérisateur (4) est configuré pour pulvériser le gaz en 1 à 6 secondes.

9. Dispositif pour attirer et collecter des insectes selon la revendication 1, **dans lequel** le pulvérisateur (4) comprend des buses qui sont agencées de façon symétrique sur la portion supérieure de la surface du logement (1).

10. Dispositif pour attirer et collecter des insectes selon la revendication 1, **dans lequel** l'unité de commande (10) est configurée pour être connectée sans fil à Internet.

11. Dispositif pour attirer et collecter des insectes selon la revendication 1, comprenant en outre des moyens de reconnaissance et d'enregistrement de types d'insectes comprenant des appareils de prise de vues vidéo qui sont agencés dans la chambre de réception (8) et un processeur pour traiter les images des appareils de prise de vues vidéo.

12. Dispositif pour attirer et collecter des insectes selon la revendication 1, **dans lequel** le réservoir de dioxyde de carbone (17) est équipé d'un détendeur de gaz (19) ayant un capteur de pression de gaz.
